# EUROPÄISCHE PATENTSCHRIFT

(11) **EP 2 183 123 B1**
(45) Veröffentlichungstag und Bekanntmachung des Hinweises auf die Patenterteilung: **16.10.2013**
(21) Anmeldenummer: 08801505.2
(22) Anmeldetag: 01.08.2008
(51) Int. Cl.: B60J 5/04, E05B 65/20

(54) **TÜRMODUL FÜR FAHRZEUGTÜR UND MONTAGEVERFAHREN**
DOOR MODULE FOR A VEHICLE DOOR, AND MOUNTING METHOD
MODULE DE PORTIERE POUR PORTIERE DE VEHICULE ET PROCEDE DE MONTAGE CORRESPONDANT

(30) Priorität: 01.08.2007 DE 102007036455; 29.11.2007 DE 102007057866; 30.01.2008 DE 102008006589
(43) Veröffentlichungstag der Anmeldung: 12.05.2010
(73) Patentinhaber: Johnson Controls Interiors GmbH & Co. KG, 47929 Grefrath (DE)
(72) Erfinder: SCHIDAN, Alexander, 42719 Solingen (DE); SKULTETY, Milan, SK-2401 Kysucke Nove Mesto (SK); MEYER, Thorsten, 47798 Krefeld (DE); MIEGLITZ, Hans-Helmut, 40789 Monheim am Rhein (DE)
(74) Vertreter: Wolff, Felix
(86) Internationale Anmeldenummer: PCT/EP2008/006365
(87) Internationale Veröffentlichungsnummer: WO 2009/015903

(56) Entgegenhaltungen:
- DE-A1- 4 219 460
- DE-A1- 10 144 330
- DE-A1- 19 748 021
- DE-A1- 19 837 662
- FR-A- 2 908 806

## Beschreibung

Die Erfindung betrifft eine Fahrzeugtür, die ein Türschloss und ein Kraft- und/oder Drehmomentübertragungsmittel aufweist, dessen eines Ende mit dem Türschloss verbunden ist.

Bei der Montage von Türverkleldungen an der Karosserie muss bei entsprechender Gesamtgeometrie, bzw. Montagefolge ein vom Schloss in der Karosserie hochgeführtes Betätigungsmittel, beispielsweise ein Bowdenzug, mit der im Fahrzeuginneren befindlichen Schlossöffnungsmittel verbunden werden. Dieser Kopplungsprozess des Bowdenendes mit dem Schlossöffnungsmittel geschieht im uneinsehbaren, zwischen Karosserie und Verkleidung befindlichen Zwischenraum. Eine manuelle Einhakung, Verclipsung oder dergleichen ist aufgrund der geringen Länge des Bowdens häufig in Blindmontage erforderlich. Erschwerend kommt hinzu, dass die gesicherte Kopplung zwischen dem Schlossöffnungsmittel und dem Türschloss ein wesentliches Sicherheitskriterium für den sich in Gefahr befindlichen Passagier darstellt. Eine garantierte Schlossbetätigung ermöglicht die Öffnung im Emstfall auch dann, wenn Türverkleldung und Türrohbau möglicherweise aus der Grundposition voneinander getrennt wurden. Aus dem Stand der Technik, beispielsweise der DE 101 44 330 A1, der gattungsgemäßen DE 198 37 662 A1 der DE 197 48 021 B4 sowie der DE 42 19 460, sind deshalb mehrere Lösungen bekannt, wie der Türrohbau gestaltet sein bzw. wie das Montageverfahren erfolgen soll. Die dort beschriebenen Fahrzeugtüren sind jedoch vergleichsweise aufwendig und/oder bieten keine ausreichende Sicherheit und/oder keine hinreichenden Demontagevoraussetzungen.

Es war deshalb die Aufgabe eine Fahrzeugtür zur Verfügung zu stellen, die einfach aufgebaut und einfach zu montieren ist und/oder einen verbesserten Schutz bei einem Unfall bietet. Des Weiteren war es die Aufgabe der vorliegenden Erfindung ein einfaches Montage- bzw. Demontageverfahren zur Verfügung zu stellen.

Gelöst wird die Aufgabe mit einer Fahrzeugtür nach Anspruch 1.

Der Türrohbau ist Teil der Fahrzeugkarosserie und an dieser insbesondere einseitig verschwenkbar oder verschiebbar angeordnet. Der Türrohbau weist ein Türschloss auf, mit dem der Türrohbau mit der Fahrzeugkarosserie verriegelbar ist. Dieses Türschloss ist mit einem Ende eines Kraft- und/oder Drehmomentübertragungsmittel, beispielsweise eines Bowdenzugs verbunden, mit dem das Türschloss aus dem Fahrzeuginneren geöffnet werden kann. An dem Türrohbau wird eine Türinnenverkleidung montiert, die unter anderen ein Öffnungsmittel für das Türschloss aufweist.

Weiterhin erfingdungsgemäß ist das andere Ende des Kraft- und/oder Drehmomentübertragungsmittel an und/oder in einem Gehäuse vormontiert und befindet sich somit in einer definierten Stellung. Im Falle eines Bowdenzuges, stützt sich die Hülle des Bowdenzuges an dem Gehäuse ab, während seine Seele in das Gehäuse hineinragt. Ein Gehäuse im Sinne der Erfindung umfängt das Kraft- und/oder Drehmomentübertragungsmittel zumindest teilweise und/oder das Kraft- und/oder Drehmomentübertragungsmittel stützt sich daran ab und/oder das Kraft- und/oder Drehmomentübertragungsmittel wird in dem Gehäuse geführt.

Erfindungsgemäß ist das Gehäuse mit einem Verbindungsmittel an dem Türrohbau angeordnet. In einer besonders bevorzugten Ausführungsform legt dieses Verbindungsmittel das Gehäuse zumindest in einer Raumrichtung relativ zum Türrohbau fest. Erfindungsgemäß handelt es sich hierbei um eine Verbindung mit vergleichsweise geringen Verbindungskräften, die insbesondere so bemessen sind, dass das Gehäuse bei einer nachfolgenden Montage einer Türinnenverkleidung an dem Türrohbau seine Lage nicht verändert. Bei einem Loslösen der Türinnenverkleidung von dem Türrohbau, beispielsweise durch Demontage oder Unfall, solite sich das Gehäuse von dem Türrohbau lösen. Erfindungsgemäß handelt es sich bei der Verbindung um eine Schnapp- oder Clipsverbindung. In einer anderen bevorzugten Ausführungsform ist das Gehäuse schwimmend, beispielsweise mittels mindestens einem elastischen Mittel, das zwischen dem Türrohbau und dem Gehäuse angeordnet ist, gelagert. Diese Ausführungsform ist insbesondere zum Ausgleich von Toleranzen geeignet.

Erfindungsgemäß weist das andere Ende des Kraft- und/oder Drehmomentübertragungsmittels ein Verbindungsmittel für eine kraft- und/oder formschlüssige Verbindung zwischen dem Kraft- und/oder Drehmomentübertragungsmittel und einem Öffnungsmittel, beispielsweise einem Türöffnerzug, auf. Besonders bevorzugt handelt es sich bei dem Verbindungsmittel um einen Bowdenhaken, der mit der Seele eines Bowdenzugs verbunden ist.

In einer bevorzugten wird das Verbindungsmittel in einer Kulisse geführt, die in einem inneren Gehäuseteil angeordnet ist, das bevorzugt mittels elastisch deformierbaren Ausgleichselementen mit dem im Türrohbau angeordneten äußeren Gehäuseteil einstückig verbunden ist und welches besonders bevorzugt spiralförmig ausgebildet ist. Diese bevorzugte Ausführungsform hat den Vorteil, dass sich das Verbindungsmittel beim Verbinden mit dem Öffnungsmittel in einer definierten Position befindet und dem Öffnungsmittel nicht ausweichen kann und dass das Verbindungsmittel bei Betätigung des Öffnungsmittels eine definierte Bewegung ausführt. Besonders vorteilhaft ist mittels des Ausgleichselements zugleich eine Erhöhung der Fertigungstoleranzen erzielbar, da aufgrund der elastischen Deformation des Ausgleichselements Positionsabweichungen in x-, y- und/oder z-Richtung ausgeglichen werden.

In einer bevorzugten Ausführungsform weist das Öffnungsmittel ein Rastelement zur Verrastung mit dem Mittel und ein Führungselement zur selbstfindenden Herstellung der Verrastung auf, so dass besonders vorteilhaft eine kraft- und/oder formschlüssige Verbindung zwischen dem Öffnungsmittel und dem Mittel durch ein Verrasten des Rastelements mit dem Mittel erzeugt wird. Somit wird die Verbindung insbesondere durch Bewegen des Öffnungsmittels in Richtung des Mittels bei der Montage der Fahrzeugtür hergestellt, wobei die Relativposition zwischen dem Öffnungsmittel und dem Mittel senkrecht zur Bewegungsrichtung mittels der Führungselemente festgelegt wird.

Insbesondere handelt es sich bei dem Öffnungsmittel um einen Türöffnerzug, mit dem im Bedarfsfall eine Zugkraft erzeugbar ist, die auf das Türschloss übertragbar ist und dieses öffnet.

Vorzugsweise handelt es sich bei dem Öffnungsmittel um einen Drehhebel. Das Öffnungsmittel ist ganz besonders bevorzugt mit dem Verbindungsmittel, das an dem Kraft- und/oder Drehmomentübertragungsmittel angeordnet ist, form- und/oder kraftschlüssig verbunden. Ganz besonders bevorzugt kommt dieser Verbund werkzeugslos zustande. Beispielsweise handelt es sich bei dem Verbund um einen Schnapp- oder Clipsverbund.

Erfindungsgemäß ist das Öffnungsmittel in einer Schale, insbesondere drehbar gelagert. Diese Schale ist wiederum an der Türinnenverkleidung angeordnet. Ganz besonders bevorzugt ist die Schale mit dem Gehäuse, insbesondere als Schnapp- oder Clipverschluss, verbunden.

Vorzugsweise weist die Schale Führungsmittel und das Gehäuse entsprechende Gegenführungsmittel auf, wobei die Führungsmittel und die Gegenführungsmittel zur gegenseitigen Führung bei der Montage der Schale am Gehäuse vorgesehen sind. Besonders vorteilhaft wird somit die Relativposition der Schale und dem Gehäuse senkrecht zu einer Türebene im Wesentlichen festgelegt, so dass der Montagevorgang vereinfacht wird.

Erfindungsgemäß ist, wenn die Verbindungskräfte zwischen dem Gehäuse und der Schale größer sind als die Verbindungskräfte zwischen dem Gehäuse und dem Türrohbau. Diese Ausführungsform der vorliegenden Erfindung hat den Vorteil, dass bei einem Lösen der Verbindung zwischen dem Türrohbau und der Türinnenverkleidung die Verbindung zwischen dem Kraft- und/oder Drehmomentübertragungsmittel und dem Öffnungsmittel erhalten und funktionsfähig bleibt.

Im Folgenden wird die Erfindung anhand der Figuren 1 - 7 beschrieben. Diese Beschreibung ist lediglich beispielhaft und schränkt den allgemeinen Erfindungsgedanken nicht ein.
**Figur 1** zeigt den Türrohbau und die Türinnenverkleidung.
**Figur 2** zeigt das Bowdenkabel und den Türöffner vor deren Verbindung.
**Figur 3** und **4** zelgen das Bowdenkabel und den Türöffner nach deren Verbindung
**Figur 5** zeigt die Demontage der Türinnenverkleldung.
**Figur 6** zeigt ein schwimmend gelagertes Gehäuse.
**Figur 7** zeigt die Rückseite eines beispielhaft dargestellten Gehäuses.
**Figur 8** zeigt das Öffnungsmittel, die Schale, das Ende des Drehmomentübertragungsmittels und das Gehäuse
**Figur 9** zeigt eine Aufsicht eines Gehäuses aus einem inneren und einem äußeren Gehäuseteile, sowie einem Ausgleichselement

Die nachfolgend beschriebenen Erfindungen ermöglichen einerseits eine vereinfachte Erstmontage am Band für den Prozessablauf der Gesamttürmontage, andererseits eine problemlose Wartung im Bedarfsfalle.

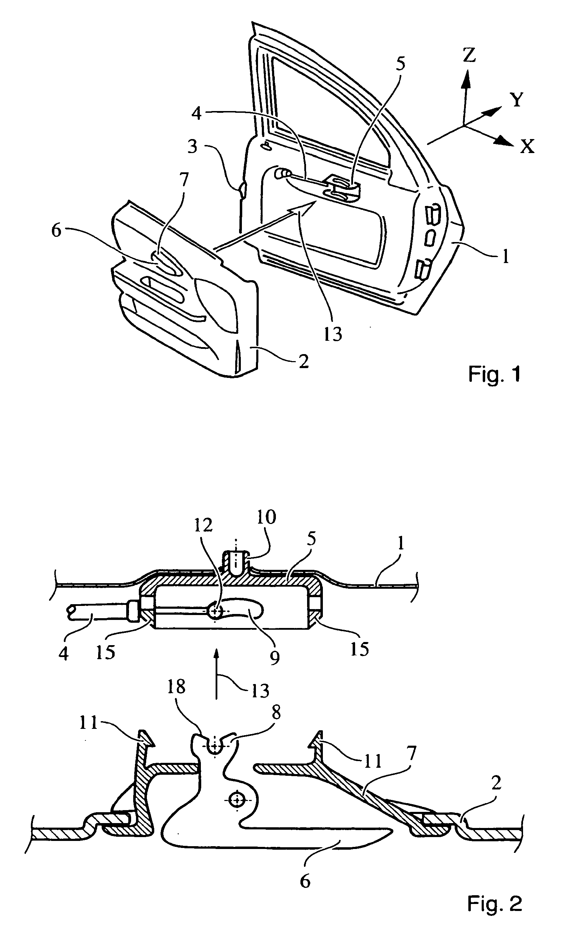

Figur 1 zeigt eine Türverkleidung 2, die auf eine Karosserie 1, den Türrohbau in Montagerichtung 13 (beispielhaft Y) aufmontiert werden soll. Zur Kopplung des Türöffner 6 mit dem Schloss 3 erfolgen nachfolgend beschriebene Montageverfahrensabläufe, die eine einfache Erstmontage am Band sicherstellen. Dieser Montageprozess vollzieht sich möglicherweise in Blindmontage, der Feinkoppelung zwischen Bowdenzug und Türöffner muss keine besondere Aufmerksamkeit gewidmet werden.

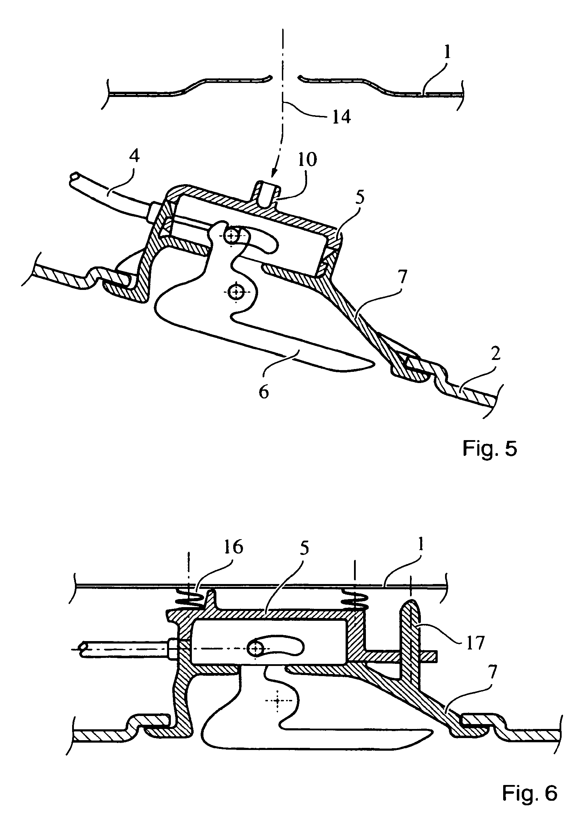

Figur 2 stellt das Detail der an der Kopplung Öffner / Schloss beteiligten Elemente in der Vormontageposition dar. Bei der Montage wird die Türverkleidung 2 in Pfeilrichtung Montagerichtung (Y) zur Karosserie bewegt. Die Montagerichtung Y ist jedoch lediglich beispielhaft. Erkennbar ist das mittels Vormontageelementen 10 auf den Türrohbau 1 vormontierte Gehäuse 5, welches den mit dem Schloss verbundenen Bowdenzug 4 vorfixiert dahingehend enthält, dass die Hülse des Bowdenzuges 4 sich an dem Gehäuse abstützt, während dessen Seele in das Gehäuse 5 hineinragt. Dieses Gehäuse 5 kann je nach Anspruch und Bedarf auch schwimmend gelagert mit dem Türrohbau 1 verbunden sein, was insbesondere bei größeren Toleranzen von Interesse und in Figur 6 dargestellt ist.

Die Seele des Bowdenzuges 4 weist an ihrem dem Türschloss abgewandten Ende ein Verbindungsmittel, beispielsweise einen Bowden-Haken 12 oder eine Bowden-Tonne oder eine Bowden-Kugel auf, der in dem Gehäuse 5 vorfixiert ist. Beim vorliegenden Beispiel ist das Verbindungsmittel 12 in einer Kulisse 9 eingelagert und positioniert.

An dem Schlossöffner 6 ist das voreilende Kopplungselement 8 angeordnet, welches zum Eingriff / Verkopplung mit dem Bowdenhaken 12 in Montagerichtung 13 steht. Zur leichteren Verkopplung (Blindmontage) bietet sich stets an, die kopplungszuführenden Flächen, wie hier beispielhaft an Kopplungselement 8 gezeigt, mit Einführschrägen 18 zu versehen. Die Kopplung/Verbindung zwischen dem Schlossöffner 6 und dem Verbindungsmittel 12 erfolgt vorzugsweise werkzeuglos, insbesondere durch eine Schnapp- oder Clipsverbindung.

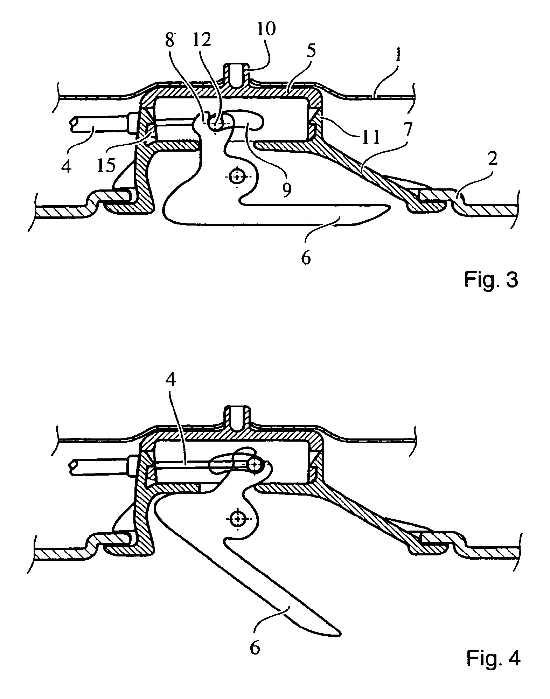

Figur 3 zeigt die vollzogene Montage der Türverkleidung 2 zur Karosserie 1. Erkennbar ist die beispielhaft gezeigte Verbindung vom Bowdenende 12 und Kopplungselement 8 am Schlossöffner 6. Außerdem wird bei der Montage das Gehäuse 5 mit einer an der Türinnenverkleidung angeordneten Türöffnerschale verbunden. Diese Verbindung erfolgt in dem vorliegenden Fall durch Verrastung des Gehäuses 5 mit der rückseitigen Türöffnerschale 7, wobei die Positionierung und Verbindung der Teile beispielhaft über entsprechende Einführschrägen 15 und Rastnasen 11 vollzogen werden kann. In dieser Position bilden Türöffner, Bowdenzug und Schloss bereits eine feste Verbindung.

In Figur 4 ist der Türöffnerzug 6, der Schlossöffner, in Arbeitsposition, d.h. in gespannter, bzw. öffnender Stellung dargestellt. Der Bowden 4 wird gezogen, das Schloss entriegelt.

Figur 5 zeigt einen denkbaren Wartungs,- bzw. Reparaturfall, bei dem die Türverkleidung 2 von der Karosserie 1 demontiert werden muss. Erkennbar dabei ist der kompakte Verbleib des Kopplungsgehäuses 5 an der Türöffnerschale 7 und somit an der Verkleidung 2. Die einzelnen Montagekräfte der entsprechenden Montageelemente sind so ausgelegt, dass sich systemorientiert eine einfachere Entriegelung des Vormontageelementes 10 aus der Karosserie ermöglicht, als eine Ausclipsung des Kopplungsgehäuses 5 von der Öffnerschale 7.

Damit wird eine sichere Kopplung Bowden 4 zu Öffnerzug 6 realisiert.

Aus Sicherheitsgründen wäre eine vorhergehende Entkopplung des Gehäuses 5 von der Öffnerschale 7 und somit vom Türöffnerzug 6 fatal und entspräche nicht den Sicherheitsanforderungen des Türöffnungssystems, weil dadurch die Verbindung zwischen dem Türöffner 6 und dem Türschloss 3 entkoppelt würde.

Figur 6 zeigt prinzipiell beispielhaft eine Variante des Gehäuses, wobei die Vormontage zur Karosserie 1 mit Hilfe von Federelementen 16 zur schwimmenden Lagerung (Toleranzaufnahme) erzielt wird, Erkennbar sind ebenfalls als beispielhaftes Detail Positionierstifte 17, die voreilend zur Montagepositionierung Verkleidung / Bowden /Karosserie beitragen.

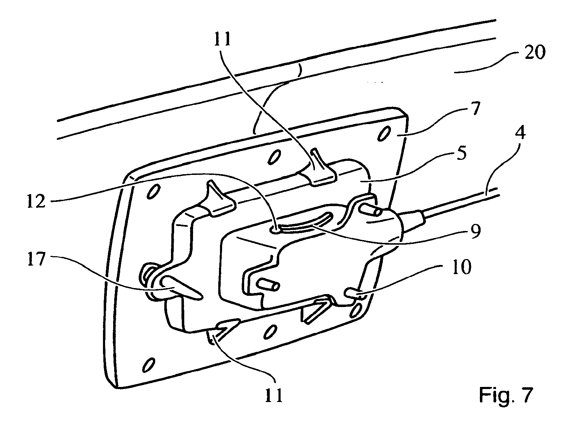

Figur 7 stellt eine beispielhafte Rückansicht einer Türverkleidung mit Detail des verclipsten Gehäuses 5 zur rückseitigen Türöffnerschale 7 in Arbeitsposition dar.

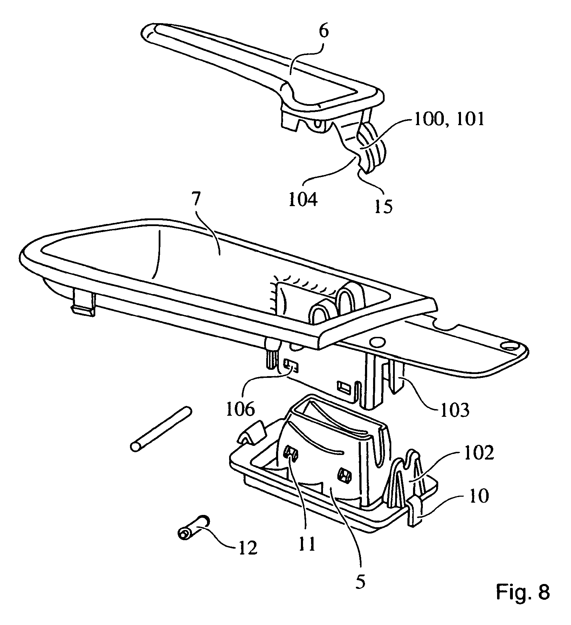

In Figur 8 ist Öffnungsmittel 6, die Schale 7, das Ende 12 des Drehmomentübertragungsmittels 4 und das Gehäuse 5 dargestellt, wobei das Öffnungsmittel 6 ein Führungsmittel 101 und ein Rastelement 100 zum Verrasten mit dem Ende 12 des Drehmomentübertragungsmittels 4 aufweist, wobei das Führungselement 101 eine Einführschräge 15 aufweist, durch welche ein Verbindungsmittel 12 in Form ein des Endes 12 des Drehmomentübertragungsmittels 4 derart geführt wird, dass bei einer Montage der Schale 7 an dem Gehäuse 5 das Ende 12 des Drehmomentübertragungsmittel in Rasteingriff mit einer Einbuchtung 104 des Rastelements 100 gelangt. Das Ende 12 des Drehmomentübertragungsmittels 4 ist in einer Kulisse 9 des Gehäuses 5 geführt, wobei das Gehäuse 5 mittels Verbindungsmittel 10 in Form von Clipsen an einem nicht abgebildeten Türrohbau 1 befestigt ist. Das Gehäuse 5 weist ferner Führungsmittel 102 und die Schale 3 Gegenführungsmittel 103 auf, welche eine Führung der Schale 7 relativ zum Gehäuse 5 parallel zu einer Türebene ermöglichen. Zur Führung werden die Führungsmittel 102 parallel zur Türebene von den Gegenführungsmitteln 103 im Wesentlichen formschlüssig umschlossen. Die Schale 7 ist mittels eines Schnappverschlusses am Gehäuse 5 befestigt, wobei der Schnappverschluss Rastnasen 11 am Gehäuse 5 umfasst, welche in Rastöffnungen 106 in der Schale 7 eingreifen.

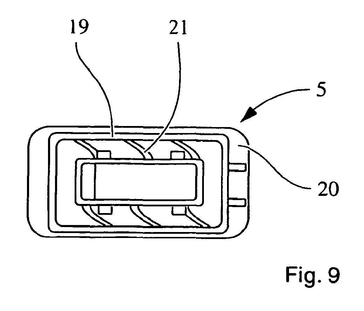

In Figur 9 ist ein insbesondere aus Kunststoff gefertigtes Gehäuse 5 dargestellt, welches ein am Türrohbau 1 befestigtes äußeres Gehäuseteil 20 und ein inneres Gehäuseteil 19 aufweist, wobei das innere Gehäuseteil 19 in einer Kulisse 9 das Ende 12 des Drehmomentübertragungsmittels 4 zur Vormontage aufnimmt. Das äußere Gehäuseteil 20 ist gegenüber dem inneren Gehäuseteil 19 beabstandet und mit diesem über ein elastisch deformierbares Ausgleichselement 21 derart verbunden, dass eine federelastische Verlagerung zwischen dem äußeren Gehäuseteil 20 und dem inneren Gehäuseteil 19 zum Ausgleich von Toleranzen in X- und Z-Richtung des Fahrzeugs möglich ist, während sich das Ausgleichselement 21 vorzugsweise in Y-Richtung steif verhält. Die Richtungsangaben beziehen sich auf die übliche Einbauordnung in den Seitentüren eines Fahrzeugs.

### Bezugszeichenliste:

- 1: Türrohbau
- 2: Türinnenverkleidung
- 3: Türschloss
- 4: Kraft- und/oder Drehmomentübertragungsmittel, Bowdenzug
- 5: Bowden-Kopplungsgehäuse
- 6: Öffnungsmittel, Türöffnerzug, Schlossöffner
- 7: Schale, Türöffnerschale
- 8: Kopplungselement
- 9: Führungskulisse
- 10: Vormontageelement
- 11: Rastnase
- 12: Verbindungsmittel, Bowdenhaken, Bowdenende
- 13: Montagerichtung
- 14: Demontagerichtung
- 15: Einführschräge / Kopplungsgehäuse
- 16: Federelement
- 17: Positionsstift
- 18: Einführschräge / Kopplungselement zum Bowdenende
- 19: Inneres Gehäuseteil
- 20: Äußeres Gehäuseteil
- 21: Ausgleichselement
- 100: Rastelement
- 101: Führungselement
- 102: Führungsmittel
- 103: Gegenführungsmittel
- 104: Einbuchtung
- 106: Rastöffnung

## Patentansprüche

1. Fahrzeugtür mit einem Türrohbau (1), der ein Türschloss (3) und ein Kraft- und/oder Drehmomentübertragungsmittel (4) aufweist, dessen eines Ende mit dem Türschloss (3) verbunden ist, wobei sein anderes Ende an und/oder in einem Gehäuse (5) vor montiert ist, das mit einem Verbindungsmittel (10) an dem Türrohbau (1) angeordnet ist und das andere Ende des Kraft- und/oder Drehmomentübertragungsmittels (4) ein Verbindungsmittel (12) für eine kraft- und/oder formschlussige Verbindung zwischen dem Kraft- und/oder Drehmomentübertragungsmittel (4) und einem Öffnungsmittel (6) aufweist, wobei das Verbindungsmittel (10), das das Gehäuse mit dem Türrohbau verbindet, eine Schnapp- oder Clipsverbindung ist, **dadurch gekennzeichnet, dass** das Öffnungsmittel in einer an einer Türinnenverkleidung (2) angeordneten Schale (7) gelagert ist, wobei die Schale (7) mit dem Gehäuse (5) verbunden ist, und wobei die Verbindungskräfte zwischen dem Gehäuse (5) und der Schale (7) größer sind als die Verbindungskräfte zwischen dem Gehäuse (5) und dem Türrohbau (1).

2. Fahrzeugtür nach Anspruch 1, **dadurch gekennzeichnet, dass** das Verbindungsmittel (12) in einer Kulisse (9) geführt ist.

3. Fahrzeugtür nach einem der voranstehenden Ansprüche, **dadurch gekennzeichnet, dass** die Schale (7) mit dem Gehäuse (5) als Schnappverschluss (11), verbunden ist.

## Claims

1. Vehicle door comprising a door shell (1) which comprises a door lock (3) and a force- and/or torque-transmitting means (4), one end of which is connected to the door lock (3), wherein its other end is premounted on and/or in a housing (5) which is arranged with a connecting means (10) on the door shell (1), and the other end of the force- and/or torque-transmitting means (4) comprises a connecting means (12) for a non-positive and/or positive connection between the force- and/or torque-transmitting means (4) and an opening means (6), wherein the connecting means (10) which connects the housing to the door shell is a snap connection or clip connection, **characterized in that** the opening means is mounted in a shell (7) arranged on an inner door lining (2), wherein the shell (7) is connected to the housing (5), and wherein the connecting forces between the housing (5) and the shell (7) are greater than the connecting forces between the housing (5) and the door shell (1).

2. Vehicle door according to Claim 1, **characterized in that** the connecting means (12) is guided in a slotted guide link (9).

3. Vehicle door according to one of the preceding claims, **characterized in that** the shell (7) is connected to the housing (5) as a snap closure (11).

## Revendications

1. Portière de véhicule comportant une carrosserie brute de portière (1) qui comprend une serrure de portière (3) et un moyen de transmission de force et/ou de couple (4) dont l'une des extrémités est reliée à la serrure de portière (3), son autre extrémité étant prémontée sur et/ou dans un boîtier (5) qui est disposé sur la carrosserie brute de portière (1) à l'aide d'un moyen de liaison (10) et l'autre extrémité du moyen de transmission de force et/ou de couple (4) comprenant un moyen de liaison (12) pour une liaison par engagement par force et/ou par coopération de formes entre le moyen de transmission de force et/ou de couple (4) et un moyen d'ouverture (6), le moyen de liaison (10) qui relie le boîtier à la carrosserie brute de portière étant une liaison par encliquetage ou par enclipsage, **caractérisée en ce que** le moyen d'ouverture est monté dans une coque (7) disposée sur un habillage intérieur de portière (2), la coque (7) étant reliée au boîtier (5) et les forces de liaison entre le boîtier (5) et la coque (7) étant supérieures aux forces de liaison entre le boîtier (5) et la carrosserie brute de portière (1).

2. Portière de véhicule selon la revendication 1, **caractérisée en ce que** le moyen de liaison (12) est guidé dans une coulisse (9).

3. Portière de véhicule selon l'une quelconque des revendications précédentes, **caractérisée en ce que** la coque (7) est reliée au boîtier (5) sous la forme d'une fermeture par encliquetage (11).
